# EUROPÄISCHE PATENTSCHRIFT

(11) **EP 0 604 879 B1**
(45) Veröffentlichungstag und Bekanntmachung des Hinweises auf die Patenterteilung: **17.06.1998**
(21) Anmeldenummer: 93120592.6
(22) Anmeldetag: 21.12.1993
(51) Int. Cl.: G01N 21/74

(54) **Anordnung für die elektrothermische Atomisierung**
Device for the electrothermical atomisation
Dispositif d'atomisation électrothermique

(30) Priorität: 23.12.1992 DE 4243766
(43) Veröffentlichungstag der Anmeldung: 06.07.1994
(73) Patentinhaber: CARL ZEISS JENA GmbH, 07745 Jena (DE)
(72) Erfinder: Eichardt, Klaus, D-07745 Jena (DE)
(74) Vertreter: Hampe, Holger

(56) Entgegenhaltungen:
- EP-A- 0 311 761
- EP-A- 0 350 722
- DE-A- 2 323 774
- DE-A- 3 924 839
- DE-U- 8 714 670
- US-A- 4 407 582

## Beschreibung

Anordnung für die elektrothermische Atomisierung, vorzugsweise für die Atomabsorptionsspektroskopie, nach dem Oberbegriff des Anspruchs 1

Anordnungen zur elektrothermischen Atomisierung von Analysenproben sind als "Graphitöfen" in der Atomabsorptionsspektroskopie bekannt. Sie bestehen im wesentlichen immer aus einem Ofenkörper, der häufig als Graphitrohr ausgebildet und bezeichnet wird und in einer Schutzgasatmosphäre zwischen zwei als Graphitgehäuseteilen ausgebildeten Elektroden kontaktiert ist (DE-AS 2413782). Die Elektroden sind üblicherweise in wassergekühlten Metallmänteln gehaltert und über diese mit einer steuerbaren Stromquelle verbunden. Mit Hilfe eines zeitgesteuerten, durch den Ofenkörperquerschnitt geleiteten, starken Stromes wird der Ofenkörper und damit die Analysenprobe elektrothermisch erhitzt und möglichst vollständig im Ofenkörperinnenraum in freie Atome überführt, wobei letztere optisch nachgewiesen werden. Die Effektivität der Atomisierung ist im wesentlichen bestimmt von der Geschwindigkeit des Temperaturaufheizprosesses und der Güte des Übergangs auf eine für die zu bestimmenden Atome erforderlichen isotropen Temperaturverteilung im Ofenkörperinnenraum. Der Prozeß der Erzeugung und des Verweilens (Abbaus) der freien Atome wird bekannterweise als "Atomisierungsphase" bezeichnet und umfaßt einen typischen Zeitraum von 1 und 10 Sekunden, abhängig von dem zu bestimmenden Element und der Analytmenge. Die elementspezifisch notwendigen Atomisierungstemperaturen erstrecken sich über einen Bereich von 800 bis 2800 °C, Für den Atomisierungsprozeß mit dem elektrothermisch erhitzten Ofenkörper ist die Temperatur der wesentlichste, die Gütekriterien Nachweisvermögen und Reproduzierbarkeit bestimmende Parameter. Von einer isotropen Temperaturverteilung im gesamten Ofenkörper kann im allgemeinen Fall nicht ausgegangen werden. Eine Ofenkörpertemperatur zu einem bestimmten Zeitpunkt erfordert die Bereitstellung einer bestimmten elektrischen Leistung. Eigenschaften des Ofenkörpers einerseits, wie Materialeigenschaften, Masse und geometrische Form sowie andererseits Eigenschaften der den Ofenkörper kontaktierenden Graphitofenhülle, wie Art und Weise der Kontaktierung und Wärmeabführung der Kühlung, Strahlungsrückkopplung der umgebenden Innenmantelfläche des Graphitofens und die Mittel der Schutzgasführung haben einen komplexen Einfluß auf die sich jeweils einstellende Ofenkörpertemperatur und letztlich auf die für deren Erzeugung notwendige elektrische Leistung.

Während im Bereich Raumtemperatur bis ca. 1000 °C die Ofenkörpertemperatur im wesentlichen von der Wärmemengendifferenz aus der durch zugeführten Strom erzeugten Joulschen Wärme und den über die Ofenkontakte abfließenden Wärmeverlusten bestimmt ist, überwiegt oberhalb 1500 °C, proportional mit der 4. Potenz der Temperatur zunehmend, die Differenz aus erzeugter Wärme und dem Verlustquotienten aus vom Ofenkörper abgestrahlter und vom Ofeninnenraum zurückgestrahlter Wärmemenge.

Bekannter und in die Analytik seit zwei Jahrzehnten eingeführter Stand der Technik sind Graphitöfen mit rohrförmigen Ofenkörpern von 20 bis 40 mm Länge, 3 bis 6 mm Innendurchmesser und 0,5 bis 1,5 mm Wandstärke, als "Graphitrohre" bekannt. Sie sind üblicherweise über ihre Enden in gekühlten, ringförmigen Kontakten gehaltert, werden von Schutzgasströmen innen und außen umspült und von elektrisch zueinander isolierten, einen Hohlraum bildenden Ofengehäuseteilen eingeschlossen. Ein Aufgabekanal für die Analysenprobe und eine spaltförmige Fuge im Ofengehäuse sind die einzigen Öffnungen dieser Art bei einer halbgeschlossenen Graphitofenanordnung, die auch als "Massmann-Ofen" bekannt ist. Wesentlicher Nachteil dieser Anordnung ist, daß durch die über die Ofenkörperenden abfließende Wärme über die Rohrlänge ein Temperaturgradient von mehreren hundert Grad ausgebildet wird. Dieses Verhalten führt zur Verschlechterung der Atomisierungseffektivität und zu analytischen Störungen durch Kondensationsprozesse der in der Aufheizphase zuvor verdampften Analytbestandteile an den gekühlten Ofenkörperenden. Beispiele für solche Ofenanordnungen sind in der DE-AS 2413782 beschrieben.
Graphitofenanordnungen vom Typ "Massmann" mit gleichmäßigerer Temperaturverteilung längs der Rohrachse im Vergleich zu der zuvor beschriebenen Anordnung sind durch eine Querschnittsprofilierung der Rohrwandstärke erreichbar. Es sind verschiedene Varianten bekannt, bei denen der Rohrkörper insbesondere in Nähe seiner Kontakte eine verminderte elektrische Leitfähigkeit aufweist, wobei der Temperaturabfall durch Wärmeabfluß zu den Kontakten hin im wesentlichen bestehen bleibt, aber die Zone isotroper Temperaturverhältnisse, von der Rohrmitte ausgehend, erweitert ist.
Beispiele dafür sind in den PS DE 3228245, DE 3442073 und DE 2148777 beschrieben.

Es ist weiterhin bekannt, daß man eine den analytischen Erfordernissen der elektrothermischen Atomisierung besser gerecht werdende isotrope Temperaturverteilung längs der Ofenkörperachse dann erzielt, wenn der Heizstrom in Ofenkörperumfangsrichtung quer zur Rohrachse geführt wird. Bekannt sind zwei sogenannte "offene" Graphitofenanordnungen nach der US-PS 4407582, wo ein Paar bzw. zwei Paare gabelförmiger Kontaktstücke radial auf gegenüberliegenden Seiten des rohrförmigen Ofenkörpers anliegen. Wesentliche Nachteile dieser Anordnungen sind die schlechte Kontaktierung an der heißen Ofenkörpermantelfläche, die nur im Bereich der Kontaktstellen isotropen Temperaturverhältnisse und die fehlende Schutzhülle in Form eines Ofengehäuses als Schutz vor Luftsauerstoffeinwirkungen.

Weiterhin sind Ausgestaltungen eines rohrförmigen Graphitofenkörpers mit an den Längsseiten der Rohrachse an der Mantelfläche angeformten, diagonal gegenüberliegenden Kontaktstücken als "Frech-Hütsch-Küvette" bekannt (DE-GM 8714670, DE-OS 3534417).

Es werden hierbei verschiedene geometrische Modifikationen zur Beeinflussung der Ofenkörpertemperatur beschrieben.

Diese Ausgestaltungen sind jedoch nur bedingt nutzbar, da keine Lösungen zur Gestaltung einer Graphitofenanordnung auf der Basis von querbeheizten Küvetten für die dabei auftretenden komplexen Wechselwirkungsprobleme angeboten werden. Die beschriebenen geometrischen Varianten weisen keine isotrope Stromdichte - und damit auch keine isotropen Temperaturverhältnisse über die Länge der Rohrmantelfläche auf.
Bekannt ist desweiteren die Ausgestaltung einer Graphitofenanordnung für einen rohrförmigen, querbeheizten Ofenkörper mit diametral gegenüberliegenden Kontaktstücken (EP 0350722/EP 0303134/EP 0311761 und DE 3802968, DE 3735013). Beschrieben wird ein Ofenkörper von kompliziert zu fertigender Geometrie und damit als Verschleißteil von hohen Kosten für den Anwender , der zwischen zwei großen, einen zylindrischen Hohlraum bildenden Zylinderkontakten so gehaltert wird, daß er von einem Schutzgasstrom umspült und von den beiden Kontakten, die zueinander einen definierten Ringspalt bilden, eingeschlossen ist. Die Wärmebilanz und -verteilung des rohrförmigen Ofenkörperteils dieser Graphitofenanordnung ist entlang der Rohrachse nicht isotrop, insbesondere während der üblichen Aufheizzeiten von ca. 1 s des Atomisierungsschritts und der sich anschließenden Haltephase von einigen Sekunden. Die an den rohrförmigen Ofenkörper angeformten, in Draufsicht trapezförmigen Kontakt stücke weisen mehrere Durchbrüche und Einschnürungen längsseits der Rohrmantelfläche auf, so daß eine konstante Stromdichteverteilung und damit auch eine konstante Wärmebildung und - ableitung über die Rohrlänge nicht gegeben ist. Desweiteren führt die kreisförmige Ausbildung der Elektrodeninnenwandung über der Rohrlängsachse zu ungleichmäßigen Wärmeverlusten infolge einer ungleichmäßigen Strahlungswechselwirkung zwischen Ofenkörperfläche und Innenraumwandung und dies zunehmend bei Temperaturen oberhalb 1500 °C, wobei die Verlustanteile an den Rohrkörperenden deutlich höher liegen als in der Rohrmitte.
Die relativ kalt gehaltenen großen Kontaktansätze verfügen über große Wärmekapazitäten, so daß der eigentliche Ofenkörper ein am Ende einer Aufheizphase ereichtes Temperaturniveau nur dann halten kann, wenn der unmittelbar eintretende Wärmeverlust infolge der einsetzenden Wärmeausgleichsprozesse mit einem aufwendigen Steueralgorithmus für die Heizleistung ausgeglichen wird. Anderenfalls würden erhebliche Analytatomverluste durch den sofortigen Abfall der Ofenkörpertemperatur eintreten.
Die flächenmäßig klein ausgebildeten Kontaktflächen zwischen den beiden Kontakten und den Ofenkörperkontaktstücken führen bei den für eine effektive Atomisierung erforderlichen Aufheizraten von bis zu 2000 Kelvin/Sekunde und den damit notwendigen Stromstärken von ca. 1000 Ampere (effektiv) zu örtlichen Überhitzungen und Leistungsverlusten und insgesamt zu einem unstabilen Kontaktierungs und -temperaturverhalten.

Der Erfindung liegt nunmehr die Aufgabe zugrunde, auf der Basis einer querbeheizten Ofenkörpergrundform eine neuartige Anordnung für die elektrothermische Atomisierung zu realisieren, die gleichzeitig die Vorteile einer längsbeheizten Ofenanordnung vom Typ "Massmann" aufweist, wobei die Komponenten der Gesamtanordnung so zusammenwirken sollen, daß
- der rohrförmige Teil des Ofenkörpers während beliebiger Aufheiz- und Haltephasen über seine Gesamtlänge isotrope Temperaturverhältnisse aufweist;
- die Wärmekapazitäten der einzelnen Teile der Anordnung, insbesondere der Kontaktstücke des Ofenkörpers, so aufeinander abgestimmt sind, daß beliebige Temperatur-Zeit-Verläufe innerhalb analytisch relevanter Grenzen nach einem sensorlosen Steuermodell des Temperatur-Zeit-Verlaufs des Ofenkörpers nach vorher bestimmten und in einem Rechner abgespeicherten elektrischen und thermischen Parametern des Systems auf adaptiver Regelbasis eingestellt werden können;
- die Verschleißteile wie Ofenkörper und Probeneingabetrichter einfach zu fertigende und somit kostengünstige Geometrien aufweisen und einfach auswechselbar sind;
- voneinander unabhängige und symmetrisch zur Ofenkörpermitte fließende Schutzgasströme ausgebildet sind, wobei eine effektive Spülung der Ofenfenster und ein schneller und sicherer Abtransport thermischer Zersetzungsprodukte der Probe gesichert sein sollen;
- bei geringem Schutzgasverbrauch ein wirksamer Schutz vor der Einwirkung von Luftsauerstoff besteht;
- und die Abkühlzeit der Anordnung und damit zusammenhängend der maximal mögliche Probendurchsatz sich nicht wesentlich von denen längsbeheizter Graphitöfen (d.h. kleiner 30 s) unterscheidet.

Diese Aufgabe wird bei einer gattungsgemäßen Anordnung durch die kennzeichnenden Merkmale des Anspruchs 1 gelöst.
Vorteilhafte Ausgestaltungen und Weiterbildungen sind in den Unteransprüchen beschrieben.
Durch die erfindungsgemäßen Merkmale werden die in der Aufgabenstellung formulierten Bedingungen verwirklicht. Insbesondere werden durch die erfindungsgemäße Ausbildung des Ofenkörpers auftretende Wärmeverluste klein, konstant und erfaßbar gehalten, um die Gesamtanordnung elektrisch steuerbar zu gestalten, ohne komplizierte Ofenkörpergeometrien zu verwenden.
Das bedeutet gleichzeitig, daß durch die einfache Geometrie des Ofenkörpers eine kostengünstige Austauschbarkeit dieses Hauptverschleißteiles der Anordnung für den Anwender gegeben ist.
Dabei bildet der Ofenkörper mit dem erfindungsgemäß ausgebildeten Ofen- und Kontaktierungsgehäuse sowie der speziellen Form der Schutzgaszuführung eine funktionale Einheit, die bezüglich ihrer Detailwirkungen in sich abgestimmt ist.

Durch die Art der Ausbildung von Form und Größe der Kontaktstücke und der darauf abgestimmten Form der Elektroden, insbesondere der Ausbildung des Kegelwinkels des Konuses nahe der Selbsthemmungsgrenze zweier ineinander greifender Kegelsegmente kann vorteilhafterweise der Anpreßdruck bei Gewährleistung konstanter Kontaktierungswiderstände entscheidend verringert werden, was die Lebensdauer der verwendeten Ofenkörper deutlich erhöht, da die Gefahr des Zerbrechens an Stellen geringen Querschnittes reduziert wird.
Da im Gegensatz zu bisherigen Lösungen die Kontaktstücke nicht "schraubstockartig" über ihre Längsflächen geklemmt werden, ist durch einfaches Wegklappen einer von einem beispielsweise schwenkbaren Kühlmantel umgebenen Elektrode der Ofenkörper gut zur Auswechslung zugänglich.
Durch die Ausbildung des Hohlteiles als separate Einheit zwischen den Elektroden kann eine Auswechslung dieses Teiles, das einem starken Verschleiß durch chemische und thermische Belastung unterliegt, erfolgen, ohne die Elektroden selbst auswechseln zu müssen.
Dabei weist das Hohlteil gleichzeitig mehrere Funktionen auf:
- die Zuführung von Schutzgasströmen zu dem Ofenkörper
- Die Aufnahme eines auswechselbaren Probenkanales
- die Aufnahme von Halterungsteilen für die optischen Küvettenfenster

Durch die vorhandene Nahtstelle, die auch einen Luftspalt beinhalten kann, zwischen dem Hohlteil und ringförmiger Elektrode, wird der thermische Fluß zur Elektrode hin unterbrochen, d.h. der Wärmefluß erfolgt nur über die Halterung des Hohlteiles, so daß die Betriebstemperatur des Hohlteiles in erwünschtem Maße erhöht wird.
Dabei kann das Hohlteil selbst aus einem Material der Gruppe keramische Werkstoffe oder Kohlenstoff bzw. Graphit bestehen. Der gesamte Aufbau, die Wirkungsweise sowie weitere vorteilhafte Auswirkungen der erfindungsgemäßen Anordnung werden im folgenden anhand der Zeichnungen näher erläutert.
Es zeigen:
- Fig. 1:: Die räumliche Darstellung eines erfindungsgemäßen rohrförmigen Ofenkörpers mit einem Teilschnitt durch das Ofenrohr
- Fig. 2:: Einen Schnitt durch den Ofenkörper entlang der Kontaktachse 5
- Fig. 3:: Eine Draufsicht auf den Ofenkörper
- Fig. 4:: Einen Schnitt durch den Ofenkörper entlang der Rohrlängsachse 4
- Fig. 5:: Einen Schnitt durch die erfindungsgemäße Gesamtanordnung entlang der Kontaktachse 5
- Fig. 6:: Einen Schnitt entlang der Kontaktachse 5 aus Fig. 5
- Fig. 7:: Einen Schnitt entlang der Probenkanalachse 7 aus Fig. 5 zur Darstellung der Gaskanäle, mit schematisch dargestelltem Ofeninnenraum.

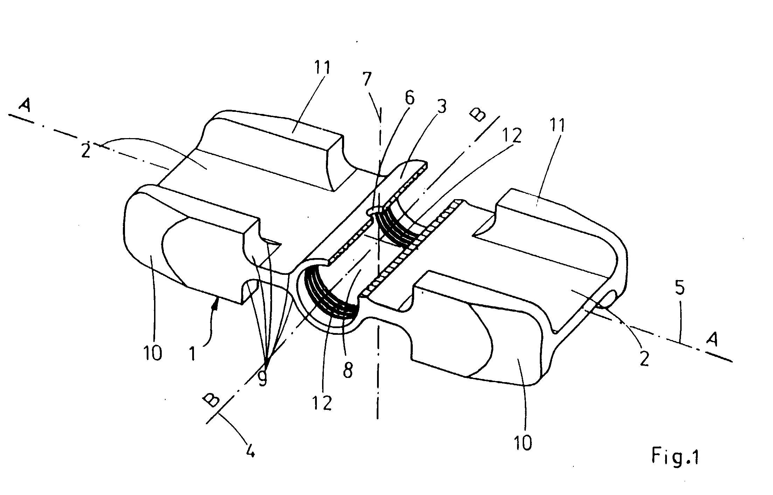

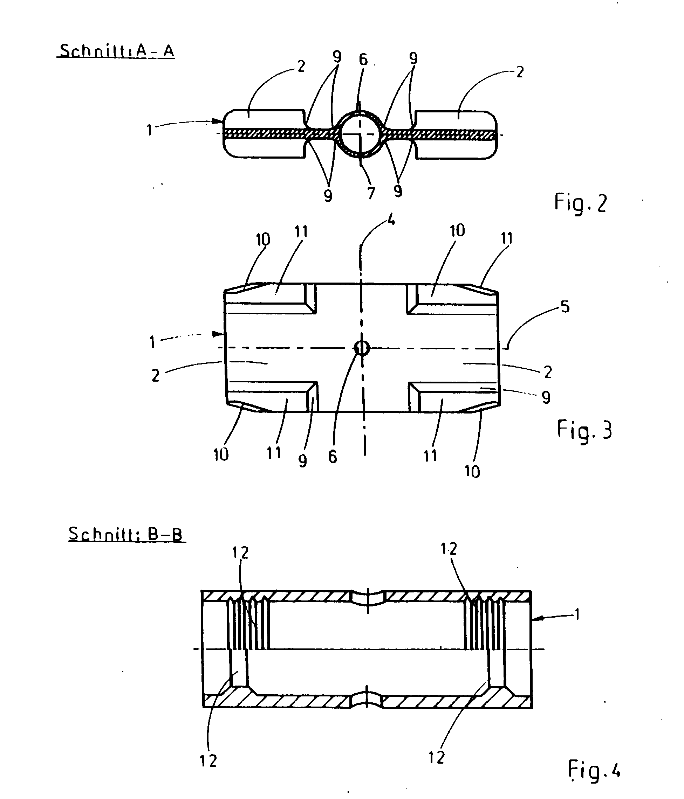

In Fig. 1 ist als rohrförmiger Ofenkörper 1 ein Graphitteil von quaderförmiger Grundform mit schrägen Eckflächen 10 dargestellt. Ein symmetrisch ausgebildetes Rohr 3 des Ofenkörpers 1 hat vorzugsweise Hohlzylinderform. Die Form des Rohres 3 ist nicht auf Hohlzylinderform beschränkt, es sind beispielsweise auch eckige oder andere Rohrquerschnitte möglich
Auf der geometrischen Mitte des Ofenkörpers 1 liegt der Schnittpunkt dreier senkrecht aufeinanderstehender Achsen, der Rohrlängsachse 4, der in Richtung der an das Rohr 3 anschließenden Kontaktstücke 2 verlaufenden Kontaktachse 5 und der durch die Probeneingabeöffnung 6 verlaufenden Probenkanalachse 7.
Der eigentliche Atomisatorraum für die zu analysierende Probe wird vom Innenraum 8 des Rohres gebildet.
Die Kontaktstücke 2 mit einer Kontaktstücklänge L sind über angeformte Radien 9 diametral gegenüberliegend an der Außenfläche des Rohres 3 angeformt. An den Längsseiten der Kontaktstücke sind Materialverdikkungen 11 angeformt, die die Kontaktstückstärke im Bereich der Eckflächen 10 symmetrisch zur Kontaktachse 5 vergrößern. Dabei entspricht die Höhe der Verdickungen 11 vorzugsweise dem Außendurchmesser des Rohres 3. Die Eckflächen 10 erstrecken sich über den Querschnitt der Verdickungen 11 und sind als konusförmige Segmentpaare unter einem Kegelwinkel α nahe der Selbsthemmungsgrenze zweier ineinander geführter Graphitkegel, vorzugsweise 30 Grad, ausgeführt.
Die sich aus Kegelwinkel α und Querschnittshöhen der Verdikkungen 11 ergebende Vergrößerung der Eckflächen 10 der Kontaktstücke 2 stehen bezüglich des Querschnittes im unverdickten Kontaktstückbereich und dem Wandstärkequerschnitt des Rohres 3 in einem bevorzugten Verhältnis von 4:2:1, jedoch lassen sich auch mit anderen Flächenverhältnissen im Rohr 3 annähernd lineare Temperaturgradienten realisieren. Der Innenraum 8 des Rohres 3 weist beidseitig, wie im Teilschnitt gemäß Fig. 1 und in Fig. 4 schematisch dargestellt, in gleichem Abstand von den Rohrenden mindestens ein rillenförmiges Verlaufshinderniss 12 auf, das die Ausbreitung einer flüssigen Probe in Richtung der Rohrenden verhindert. Dabei kann die mindestens eine Rille (12) sowohl umlaufend, als auch nur über einen Teilumfang des rohrförmiger Ofenkörpers ausgebildet sein.

Anstelle der hier dargestellten Rillen kann auch ein beidseitig angeordneter Innenring, z.B. ein erhabener Kreisring Verwendung finden. Auch dieser kann dabei nur über einen Teilumfang des rohrförmigen Ofenkörpers ausgebildet sein.

Die Flächensegmente (10) sind vorteilhaft unter definiertem Kegelwinkel angeformte Konussegmente , die in komplementäre, konusförmige Innenflächen der ringförmigen Elektroden (13) eingreifen, wobei mindestens im Bereich jedes Flächensegmentes der Querschnitt der Kontaktstücke vergrößert ist.

Der Kegelwinkel α des Konus liegt vorteilhaft in einem Bereich von 20 - 40 Grad .

Das Verhältnis der Breite der Bereiche vergrößerten Querschnittes zur Ofenkörperbreite, d. h. in Richtung der Rohrlängsachse (4), liegt vorteilhaft unterhalb von 1 : 5 und das Verhältnis der Länge der Bereiche vergrößerter Querschnitte in Richtung der Kontaktachse (5) maximal 2/3 der Kontaktstücklänge (L) beträgt.

Bezogen auf mindestens eine Ofenkörperseite, beträgt das Verhältnis der aus den beiden Flächensegmenten eines Kontaktstückes (2) bestehenden Gesamtkontaktfläche zur Querschnittsfläche des quaderförmigen Kontaktstückabschnittes und zur Querschnittsfläche des Rohrmantels des Ofenkörpers (1) etwa 4 : 2 : 1 .

Zur Vermeidung von Kerbwirkungen und damit des Entstehens von Sollbruchstellen während des analytischen Betriebes ist jede Zone der Querschnittsveränderung mit einem angeformten Radius versehen.

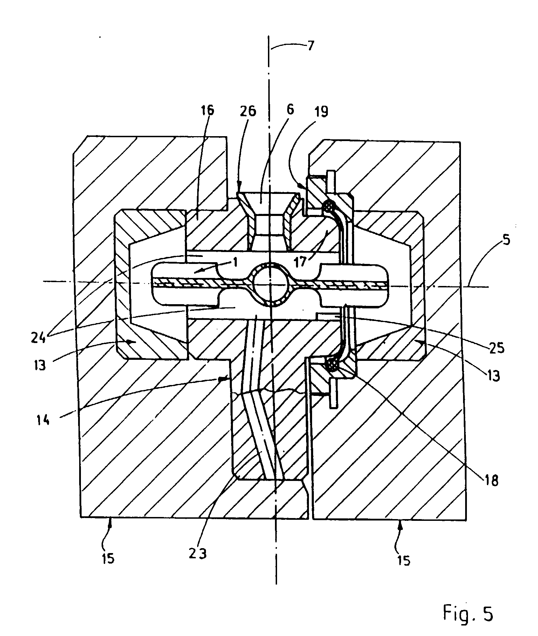

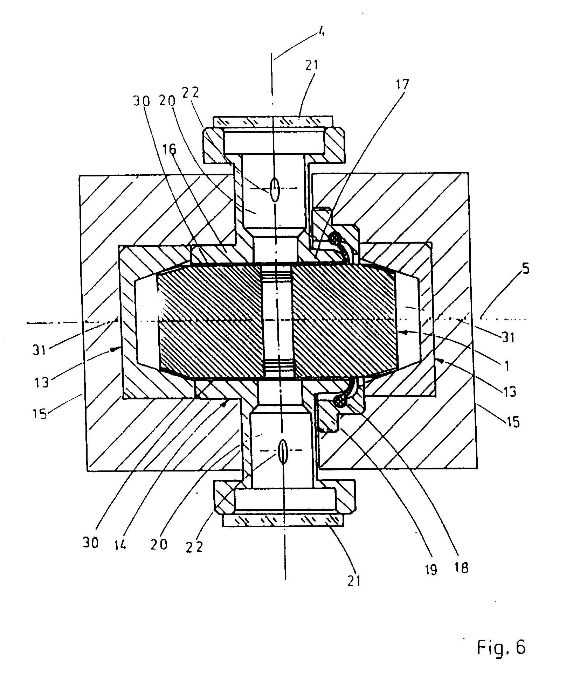

Die erfindungsgemäße Gesamtanordnung ist in Fig. 5 - 7 dargestellt.
Der rohrförmige Ofenkörper 1 greift über die Eckflächen 10 in komplementäre, konusförmige Innenflächen der ringförmigen Elektroden 13 ein. Diese umschließen, zusammen mit einem Hohlteil 14, den Ofenkörper 1 vollständig. Die ringförmigen Elektroden 13 und teilweise das Hohlteil 14 sind von vorzugsweise metallischen Kühlmänteln 15 umgeben.
An das Hohlteil 14 sind, wie in Fig. 6 erkennbar, in Richtung der Kontaktachse 5, zwei zylindrische Hohlschäfte 16, 17 angeformt, wobei Schaft 16 stirnseitig an eine ringförmige Elektrode 13 anschließt und von einem Kühlmantel 15 umschlossen wird. Der gegenüberliegende Schaft 17 steht mit seiner kegelförmigen Außenmantelfläche in kontakt mit der Dichtlippe eines flexiblen Dichtungsringes 18, der in einem vom Kühlmantel 15 umschlossenen Trägerring 19 gehaltert ist.

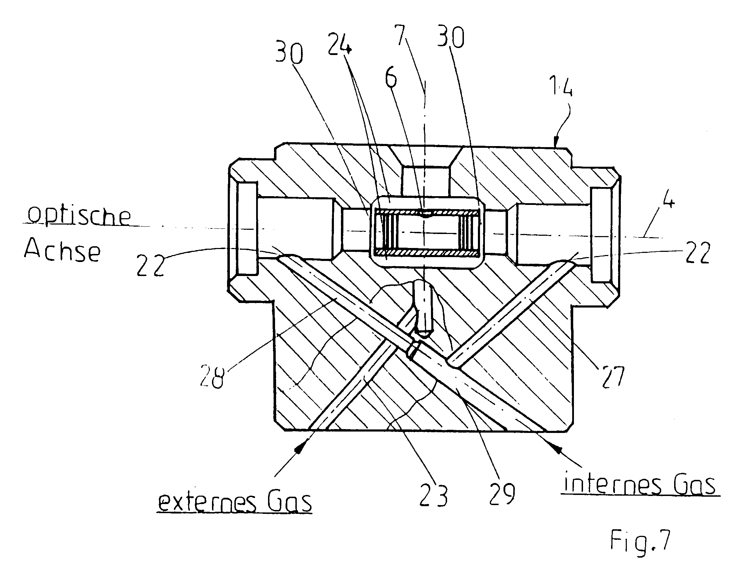

In Richtung der Rohrachse 4 sind am Hohlteil 14 zwei weitere zylindrische Hohlschäfte 20 angeformt. Diese dienem der Einund Ausführung des (nocht dargestellten) Meßlichtstrahlenbündels in den Innenraum 8 des Rohres 3 über Fenster 21. In die Hohlschäfte 20 Mûnden Austrittsöffnungen 22 der in Fig. 7 dargestellten Kanäle 27, 28 für die inneren Teilgasströme.

Im Schnitt gemäß Fig. 5 ist der Kanal 23 für den externen Schutzgasstrom dargestellt, der in den Innenraum 24 des Graphithohlteiles 14 unterhalb des Rohres 3 mündet.

Der im wesentlichen quaderförmige Innenraum 24 weist Auflagepunlte 25 zur Vorjustierung der Lage des Ofenkörpers 1 durh sein Eigengewicht bei geöffneter Anordnung auf.

Beim Schließen der Anordnung geliten die Kontaktstücke 2 über die Eckflächen 10 in die ringförmigen Elektroden 13 und der Ofenkörper 1 wird gleichzeitig bis in Höhe der Rohrachse 4 angehoben.

Oberhalb der Probeneingabeöffnung 6 befindet sich in Richtung der Probenkanalachse 7 ein auswechselbares, beispielsweise als mit Pyrokohlenstoff beschichtetes graphitforteil ausgebildetes Trichterteil 26 zur Probenzuführung. Dadurch ist die regelmäßige Reiningung zur Vermeidung von Kontaminationen gewährleistet.

Die in Fig. 7 dargestellten kanäle 27 und 28 für die inneren Teilgasströme entstehen durch vorzugsweise 1:1-Aufspaltung eines gemeinsamen Zuführungskanales 29 und münden in Austrittsöffnungen 22. Der Kanal 23 für den externen Schutzgasstrom ist in dem Schnitt gemäß Fig. 7 nur teilweise sichtbar.
Der Ofenkörper 1 ist im quaderförmigen Innenraum 24 so gelagert, daß zwischen der Außenfläche des Rohres 3 und der Innenwand des Innenraumes 24 jeweils auf gegenüberliegenden Seiten gleiche Spalte 30 im wesentlichen konstanter Breite vorliegen.
Die Kontaktstücke 2, die an das Rohr 3 angeformt sind, weisen keine Durchbrüche oder zusätzliche Einschnürungen im Bereich der Anformungen auf, so daß als Voraussetzung für die Erzeugung Joulescher Wärme eine völlig homogene Stromdichteverteilung über den Kontaktstückquerschnitt und damit auch im Rohrquerschnitt vorliegt.
Die großflächigen Eckflächen 10, die paarweise an den Stirnseiten der Kontaktstücke 2 angeordnet sind, gewährleisten eine reproduzierbare Stromzufuhr und konstante Wärmeableitung.
Dadurch werden Bereiche von annähernd linear ansteigenden Temperaturgradienten, ausgehend von den Kontaktflächen 10, bis zur Mantelfläche des Rohres 3, innerhalb der Querschnitte der Kontaktstücke 2, aufgebaut.
Das führt zu einem nur unwesentlichen Wärmeabfluß vom Rohr 3 in die Kontaktstücke 2, was von besonderer Bedeutung für die analytisch relevante Übergangsphase vom Aufheiz- zum Halteschritt in der Atomisierungsphase ist. Gleichzeitig ist gesichert, daß der Verlustfaktor durch Wärmeableitung an der Wärmegesamtbilanz des Ofenkörpers innerhalb des analytischen Temperaturbereiches nahezu konstant ist. Dieser Effekt konnte mit einer bekannten Küvette, beispielsweise des in der Einleitung aufgeführten "Frech-Hütsch-Typs", nicht erzielt werden.

Durch die in Fig. 5 und 7 dargestellte rechteckige Gestaltung des Querschnittes des Innenraumes 24 wird gewährleistet, daß jeder Punkt der Mantellinien des Rohres 3 in Richtung der Rohrlängsachse 4 konstanten geometrischen Abstand zur Innenwandung des Hohlteiles 14 aufweist, wodurch die Wärmeverluste infolge der Strahlungswechselwirkung zwischen Rohrmantel und Inneraum im wesentlichen konstant gehalten werden.
Gleichzeitig ist durch die konstanten Abmessungen der Spalte 30, 31 für eine definierte Schutzgasströmung gesorgt.

Die Kontaktstücke (2) des rohrförmigen Ofenkörpers (1) ragen zu etwa 1/3 ihrer Länge in die Elektroden (13) hinein.

Das Hohlteil (14) umschließt den rohrförmigen Ofenkörper (1) und zumindest Teilbereiche der Kontaktstücke (2) symmetrisch zur Rohrlängsachse (4) .

Die Umschließung der Kontaktstücke (2) liegt in einem Bereich von 50 - 70 % ihrer Länge in Richtung der Verbindungslinie zwischen den Kontaktstücken (Kontaktachse (5)) .

Der Innenraum des Hohlteiles (14) hat zumindest bezüglich der Kontaktachse (5) einen rechteckigen Querschnitt.

Zwischen dem Ofenkörper (1) und den Seitenflächen des Innenraumes (24) des Hohlteiles (14) sind Spalte (30) als Führungsmittel für Schutzgasströme sowie zur Vermeidung unerwünschter elektrischer und thermischer Kontakte vorgesehen

Die Spaltenbreiten sind vorteilhaft konstant und liegen in einem Bereich von 0,5 ... 1 mm .

Der zweite metallische Kühlmantel (15) ist beweglich ausgebildet .

Der Durchmesser der zur Durchführung des Meßlichtbündels im rohrförmigen Ofenkörper (1) vorgesehenen Bohrung erweitert sich von den Ofenrohrenden in Richtung der Küvettenfenster stufenförmig .

Die Eintrittsöffnungen der Zuführungskanäle (23, 29) für die internen und externen Schutzgasströme sind an der Unterseite des quaderförmigen Hauptkörpers des Hohlteiles (14) angeordnet.

Die Führung des äußeren und der inneren Schutzgasströme verläuft folgendermaßen:
Die inneren Teilgasströme der Kanäle 27, 28 sind auf die Mitten der Fenster 21 gerichtet und umspülen die Innenseiten der Fenster 21, strömen anschließend in Richtung der Mitte des Rohres 3, wobei am Spalt 30 zwischen Rohrenden und Innenraum 24 eine nochmalige definierte Teilung der Teilgasströme erfolgt, bevor sie sich über dem Rohr 3 nach vollständiger innerer und äußerer Umspülung des Rohrkörpers vereinigen und aus dem Trichterteil 26 austreten.
Der aus dem Kanal 23 austretende äußere Schutzgasstrom füllt den Teilraum unterhalb des Ofenkörpers 1 zunächst vollständig aus, bevor er durch die den Ofenkörper 1 umgebenden Spalte 30. 31 den Ofenkörper 1 umspült und in den Teilraum oberhalb des Ofenkörpers 1 einströmt und ebenfalls über das Trichterteil 26 den Innenraum 24 verläßt.
Neben der somit gewährleisteten Rundumspülung des Ofenkörpers 1 gestattet die Führung der inneren Teilgasströme den schnellen Abtransport von Probenrückständen aus dem Rohrinnenraum 8 in der thermischen Zersetzungsphase der Analysenprobe. Über eine Variation der Gasmenge kann dabei die Verweilzeit der im Rohr gebildeten Analytatome positiv beeinflußt werden.
Während des Aufheizvorganges des Ofenkörpers 1 erfährt dieser eine thermische Ausdehnung, vorzugsweise in Richtung der Kontaktachse 5, wodurch sich der Abstand zwischen der Stirnfläche des Hohlteiles 14 und dem Trägerring 19 erhöht.

Durch Mitgehen der Dichtlippe des Dichtringes 18 wird dabei der Zutritt von Luftsauerstoff in den Innenraum 24 verhindert.

### Aufstellung der verwendeten Bezugszeichen

- 1: rohrförmiger Ofenkörper
- 2: Kontaktstücke
- 3: Rohr
- 4: Rohrachse
- 5: Kontaktachse
- 6: Probeneingabetöffnung
- 7: Probenkanalachse
- 8: Innenraum
- 9: Radien
- 10: Eckflächen
- 11: Materialverdickungen
- 12: Verlaufshindernisse
- 13: ringförmige Elektroden
- 14: Hohlteil
- 15: Metallkühlmätel
- 16, 17: zylindrische Hohlschäfte
- 18: Dichtungsring
- 19: Trägerring
- 20: zylindrische Hohlschäfte
- 21: Fenster
- 22: Austrittsöffnungen
- 23: Schutzgaskanal
- 24: Innenraum
- 25: Auflagepunkte
- 26: Trichterteil
- 27, 28: Schutzgaskanäle
- 29: Zuführungskanal
- 30, 31: Spalte

## Patentansprüche

1. Anordnung für die elektrothermische Atomisierung, vorzugsweise für die Atomabsorptionsspektroskopie, wobei ein querbeheizter, rohrförmiger Ofenkörper mit an den Längsseiten des Ofenkörpers angeformten Kontaktstücken, die sich über die gesamte Lange des Ofenkörpers erstrecken und mit ihm stofflich eine Einheit bilden, vorgesehen ist, der durch Stromzufuhr über seitlich angreifende, ringförmige Elektroden aufgeheizt wird, dadurch gekennzeichnet, daß die Kontaktstücke (2) eine quaderähnliche Form ohne Durchbrüche mit im wesentlichen rechteckigen Stirnseiten aufweisen, wobei an den Ecken der Stirnseiten sich beiderseitig nach oben und nach unten erstreckende Flächensegmente (10) vorhanden sind, die als einzige Kontaktstellen der Anordnung mit den Elektroden (13) in elektrischem Kontakt stehen, und daß zwischen den Elektroden (13) ein separates, auswechselbares Hohlteil (14) vorgesehen ist, das Öffnungen zur Probenzuführung, zur Schutzgasführung sowie zum Durchtritt des Meßlichtstrahlenbündels aufweist und mit den Elektroden den Ofenkörper umschließt.

2. Anordnung nach Anspruch 1, dadurch gekennzeichnet, daß die Flächensegmente (10) unter definiertem Kegelwinkel angeformte Konussegmente sind, die in komplementäre, konusförmige Innenflächen der ringförmigen Elektroden (13) eingreifen, wobei mindestens im Bereich jedes Flächensegmentes der Querschnitt der Kontaktstücke vergrößert ist.

3. Anordnung nach Anspruch 2, dadurch gekennzeichnet, daß der Kegelwinkel α des Konus in einem Bereich von 20 - 40 Grad liegt.

4. Anordnung nach Anspruch 2, dadurch gekennzeichnet, daß das Verhältnis der Breite der Bereiche vergrößerten Querschnittes zur Ofenkörperbreite, d.h. in Richtung der Rohrlängsachse (4), unterhalb von 1:5 liegt und das Verhältnis der Länge der Bereiche vergrößerter Querschnitte in Richtung der Kontaktachse (5) maximal 2/3 der Kontaktstücklänge (L) beträgt.

5. Anordnung nach Anspruch 2, dadurch gekennzeichnet, daß die Höhe (h) jeder der beiden Querschnittsvergrößerungen jedes Kontaktstückes (2) durch die angeformten Flächensegmente (10) mit dem Außendurchmesser des rohrförmigen Ofenkörperteils übereinstimmt.

6. Anordnung nach einem der Ansprüche 1 - 5, dadurch gekennzeichnet, daß, bezogen auf mindestens eine Ofenkörperseite, das Verhältnis der aus den beiden Flächensegmenten eines Kontaktstückes (2) bestehenden Gesamtkontaktfläche zur Querschnittsfläche des quaderförmigen Kontaktstückabschnittes und zur Querschnittsfläche des Rohrmantels des Ofenkörpers (1) etwa 4:2:1 beträgt.

7. Anordnung nach einem der AnsprÜche 1 - 6, dadurch gekennzeichnet, daß zur Vermeidung von Kerbwirkungen und damit des Entstehens von Sollbruchstellen während des analytischen Betriebes jede Zone der Querschnittsveränderung mit einem angeformten Radius versehen ist.

8. Anordnung nach einem der Ansprüche 1 - 7, dadurch gekennzeichnet, daß die Innenmantelfläche des rohrförmigen Ofenkörpers (1) in konstantem Abstand von den Rohrenden mindestens ein Verlaufshindernis (12) für flüssige Analysenproben aufweist.

9. Anordnung nach Anspruch 8, dadurch gekennzeichnet, daß das Verlaufshindernis (12) mindestens eine umlaufende Rille ist.

10. Anordnung nach Anspruch 9, dadurch gekennzeichnet, daß die Rille nur über einen Teilumfang des rohrförmigen Ofenkörpers ausgebildet ist.

11. Anordnung nach Anspruch 8, dadurch gekennzeichnet, daß das Verlaufshindernis (12) ein erhabener Kreisring ist.

12. Anordnung nach Anspruch 11, dadurch gekennzeichnet, daß der Kreisring nur über einen Teilumfang des rohrförmigen Ofenkörpers ausgebildet ist.

13. Anordnung nach einem der Ansprüche 1 - 12, dadurch gekennzeichnet, daß die Elektroden (13) vollständig von metallischen Kühlmänteln (15) umgeben sind.

14. Anordnung nach einem der Ansprüche 1 - 13, dadurch gekennzeichnet, daß die Kontaktstücke (2) des rohrförmigen Ofenkörpers (1) zu etwa 1/3 ihrer Länge in die Elektroden (13) hineinragen.

15. Anordnung nach einem der Ansprüche 1 - 14, dadurch gekennzeichnet, daß beide Elektroden (13) gleiche geometrische Form aufweisen.

16. Anordnung nach einem der Ansprüche 1 - 15, dadurch gekennzeichnet, daß das Hohlteil (14) den rohrförmigen Ofenkörper (1) und zumindest Teilbereiche der Kontaktstücke (2) symmetrisch zur Rohrlängsachse (4) umschließt.

17. Anordnung nach Anspruch 16, dadurch gekennzeichnet, daß die Umschließung der Kontaktstücke (2) in einem Bereich von 50 - 70% ihrer Länge in Richtung der Verbindungslinie zwischen den Kontaktstücken (Kontaktachse (5) ) liegt.

18. Anordnung nach Anspruch 1 und 16, dadurch gekennzeichnet, daß der Innenraum des Hohlteiles (14) zumindest bezüglich der Kontaktachse (5) einen rechteckigen Querschnitt hat.

19. Anordnung nach Anspruch 18, dadurch gekennzeichnet, daß zwischen dem Ofenkörper (1) und den Seitenflächen des Innenraumes (24) des Hohlteils (14) Spalte (30) als Führungsmittel für Schutzgasströme sowie zur Vermeidung unerwünschter elektrischer und thermischer Kontakte vorgesehen sind.

20. Anordnung nach Anspruch 19, dadurch gekennzeichnet, daß die Spaltbreiten konstant sind und in einem Bereich von 0,5 ... 1 mm liegen.

21. Anordnung nach einem der Ansprüche 18 - 20, dadurch gekennzeichnet, daß im Innenraum (24) mindestens zwei gegenüberliegende Auflagepunkte (25) zur Vorjustierung der Lage des rohrförmigen Ofenkörpers (1) durch sein Eigengewicht vorgesehen sind.

22. Anordnung nach einem der Ansprüche 18 - 21, dadurch gekennzeichnet, daß das Graphithohlteil (14) aus einem quaderförmigen Hauptkörper besteht, an den zwei mal zwei, jeweils gegenüberliegende zylindrische Hohlschäfte (16, 17, 20) angeformt sind, deren Symmetrieachsenschnittpunkt den Ofenkörpermittelpunkt bildet.

23. Anordnung nach Anspruch 22, dadurch gekennzeichnet, daß zwei gegenüberliegende Hohlschäfte (16, 17) in Richtung der Kontaktachse des rohrförmigen Ofenkörpers liegen.

24. Anordnung nach Anspruch 23, dadurch gekennzeichnet, daß zwei gegenüberliegende Hohlschäfte (20) zur Durchführung des Meßlichtbündels in Richtung der Rohrlängsachse (4) des rohrförmigen Ofenkörpers (1) angeordnet sind, deren Außenflächen die Aufnahmen der Küvettenfensterhalterungen bilden.

25. Anordnung nach Anspruch 23, dadurch gekennzeichnet, daß sich die Stirnfläche des ersten Schaftes (16) an eine erste Elektrode (13) anschließt.

26. Anordnung nach Anspruch 25, dadurch gekennzeichnet, daß Schaft (16) und Elektrode (13) von der zylindrischen Ausnehmung eines ersten metallischen Kühlmantels (15) vollständig umfaßt werden.

27. Anordnung nach Anspruch 24, dadurch gekennzeichnet, daß zur Abdichtung des von den Elektroden (13) und dem Hohlteil (14) umschlossenen Innenraumes (24) der zweite Schaft (17) eine kegelförmige Außenmantelfläche aufweist, die über eine Radiusphase in seine Stirnfläche übergeht, wobei dieser Stirnfläche gegenüberliegend, eine mit der Radiusphase in Kontakt stehende Ringlippendichtung (18) vorgesehen ist und ein ringförmiges, in einem zweiten metallischen Kühlmantel (15) gelagertes Trägerringhalteteil (19) mit seinem Innenraum den Schaft so umschließt, daß zwischen den Stirnflächen des Trägerteils (19) und dem quaderförmigen Hauptkörper des Hohlteiles (14) ein definierter Spalt vorliegt.

28. Anordnung nach Anspruch 27, dadurch gekennzeichnet, daß der zweite metallische Kühlmantel (15) beweglich ausgebildet ist.

29. Anordnung nach Anspruch 1 und 24, dadurch gekennzeichnet, daß sich der Durchmesser der zur Durchführung des Meßlichtbündels im rohrförmigen Ofenkörper (1) vorgesehenen Bohrung von den Ofenrohrenden in Richtung der Küvettenfenster stufenförmig erweitert.

30. Anordnung nach einem der Ansprüche 18 - 22, dadurch gekennzeichnet, daß das Hohlteil (14) in seinem Oberteil eine senkrecht angeordnete Probeneingabeöffnung (6a) aufweist, die mit der Probeneingabeöffnung (6) des rohrförmigen Ofenkörpers fluchtet.

31. Anordnung nach Anspruch 30, dadurch gekennzeichnet, daß in der Probeneingabeöffnung (6a) ein auswechselbares Trichterteil (26) zur Probeneingabe vorgesehen ist.

32. Anordnung nach Anspruch 31, dadurch gekennzeichnet, daß das Trichterteil (26) ein mit Pyrokohlenstoff beschichtetes Graphitformteil ist.

33. Anordnung nach einem der Ansprüche 1 - 31, dadurch gekennzeichnet, daß im Innenraum (24) des Hohlteils (14) in einen Bereich unterhalb des rohrförmigen Ofenkörpers (1) eine Austrittsöffnung für den äußeren (externen) Schutzgasstrom vorhanden ist.

34. Anordnung nach einem der Ansprüche 1 - 31, dadurch gegekennzeichnet, daß für die inneren (internen) Schutzgasteilströme im Innenraum (24) des Hohlteil (14) vor den Küvettenfenstern jeweils eine Austrittsöffnung (22) vorhanden ist.

35. Anordnung nach Anspruch 33 und 34, dadurch gekennzeichnet, daß die Eintrittsöffnungen der Zuführungskanäle (23, 29) für die internen und externen Schutzgasströme an der Unterseite des quaderförmigen Hauptkörpers des Hohlteiles (14) angeordnet sind.

36. Anordnung nach Anspruch 34 oder 35, dadurch gekennzeichnet, daß zur Erzeugung der internen Schutzgasteilströme vor den Küvettenfenstern ein Hauptzuführungskanal (29) vorgesehen ist, der innerhalb des quaderförmigen Hauptkörpers des Hohlteils (14) verläuft.

37. Anordnung nach Anspruch 36, dadurch gekennzeichnet, daß die Längsachsen der Teilkanäle (27, 28) in Richtung des Schnittpunktes der optischen Achse des Meßlichtstrahlenbündels mit den Küvettenfenstern verlaufen.

38. Verfahren zum Führen der Schutzgasströme mit Anordnungen gemäß einem der Ansprüche 31 - 37, wobei über einen ersten Schutzgaskanal (23) der externe Schutzgasstrom unterhalb der Ofenkörpermitte austritt, sich das Schutzgas zunächst gleichmäßig über die untere Hälfte des Ofeninnenraumes (24) verteilt, den Ofenkörper (1) über die gesamte Länge der Spalte (30) in Richtung der Kontaktstück- und - rohrlängsachse (5, 4) gleichmäßig umspült, nur ein kleiner Teil durch die Spalte (30) in Richtung Kontaktachse (5) hindurchtritt und der größere Teil durch die Spalte (31) in Richtung Rohrlängsachse (4) an den Kontaktstückenden in die obere Hälfte des Ofeninnenraumes (24) gelangt und nach Rückstau durch die definierte Probeneingabeöffnung (6a) des Trichters (26) das Hohlteil (14) verläßt, und über einen zweiten, inneren Schutzgaskanal (29), der sich in zwei Teilkanäle (27, 28) aufteilt, die inneren Schutzgasteilströme zunächst an die Innenflächen der Küvettenfenster (21) gelangen und anschließend in Richtung Rohrkörpermitte geführt werden, wo sich beide inneren Teilgasströme an den von den Rohrkörperstirnflächen und dem Ofenkörperinnenraum (24) gebildeten Spaltquerschnitten in einem definierten Verhältnis nochmals in je eine externe und interne Komponente aufteilen und gleichfalls über die Probeeingabeöffnung (6a) das Hohlteil (14) verlassen.

## Claims

1. Arrangement for electrothermal atomisation, preferably for atom absorption spectroscopy, wherein a transversely heated, tube-shaped furnace body is provided with contact pieces which are integrally formed on the longitudinal sides of the furnace body and extend over the entire length of the furnace body and form therewith, as far as the material is concerned, one unit, which furnace body is heated by supplying current by way of annular electrodes which are effective in a lateral manner, characterised in that the contact pieces (2) comprise a squarelike shape without cut-outs with substantially rectangular end faces, wherein on the corners of the end faces surfaces segments (10) are provided which extend on both sides in an upwards and downwards direction and as single contact points of the arrangement are electrically contacted to the electrodes (13), and that between the electrodes (13) there is provided a separate, removable hollow part (14) which comprises orifices for the purpose of feeding samples, guiding inert gas and for the passage of the measuring light beam bundle and which hollow part, together with the electrodes, encompasses the furnace body.

2. Arrangement according to claim 1, characterised in that the surface segments (10) are conical segments which are integrally formed at a defined angle of taper and which engage into complementary, conical inner surfaces of the annular electrodes (13), wherein the cross-section of the contact pieces is increased at least in the region of each surface segment.

3. Arrangement according to claim 2, characterised in that the angle of taper a of the cone is in a range of 20 - 40°.

4. Arrangement according to claim 2, characterised in that the ratio of the width of the regions of increased cross-section to the furnace body, i.e in the direction of the pipe longitudinal axis (4), is less than 1 : 5 and the ratio of the length of the regions of increased cross-section, in the direction of the contact axis (5), is a maximum of 2/3 of the contact piece length (L).

5. Arrangement according to claim 2, characterised in that the height (h) of each of the two increases in cross-section of each contact piece (2) corresponds to the outer diameter of the tube-shaped furnace body part by virtue of the integrally formed surface segments (10).

6. Arrangement according to any one of the claims 1 - 5, characterised in that, with respect to at least one side of the furnace body, the ratio of the entire contact surface, with consists of the two surface segments of a contact piece (2), to the cross-sectional area of the square contact piece portion and to the cross-sectional area of the pipe sheathing of the furnace body (1) is approximately 4 : 2 : 1.

7. Arrangement according to any one of the claims 1 - 6, characterised in that for the purpose of obviating notch effects and thus the development of predetermined breaking points during the analytic operation each zone of the change in cross-section is provided with an integrally formed radius.

8. Arrangement according to any one of the claims 1 - 7, characterised in that the inner peripheral surface of the tube-shaped furnace body (1) comprises, at a constant spaced interval from the pipe ends, at least one obstruction (12) which prevents the progression of liquid analytical samples.

9. Arrangement according to claim 8, characterised in that the obstruction (12) is at least one circumferential groove.

10. Arrangement according to claim 9, characterised in that the groove is only formed over a part of the periphery of the tube-shaped furnace body.

11. Arrangement according to claim 8, characterised in that the obstruction (12) is a raised circular ring.

12. Arrangement according to claim 11, characterised in that the circular ring is only formed over a part of the periphery of the tube-shaped furnace body.

13. Arrangement according to any one of the claims 1 - 12, characterised in that the electrodes (13) are completely surrounded by metallic cooling jackets (15).

14. Arrangement according to any one of the claims 1 - 13, characterised in that approximately 1/3 of the length of the contact pieces (2) of the tube-shaped furnace body (1) protrudes into the electrodes (13).

15. Arrangement according to any one of the claims 1 - 14, characterised in that both electrodes (13) comprise an identical geometric shape.

16. Arrangement according to any one of the claims 1 - 15, characterised in that the hollow part (14) encompasses the tube-shaped furnace body (1) and at least partial regions of the contact pieces (2) in a symmetrical manner with respect to the pipe longitudinal axis (4).

17. Arrangement according to claim 16, characterised in that the contact pieces (2) are encompassed in a range of 50 - 70% of the length thereof in the direction of the connection line between the contact pieces (contact axis (5)).

18. Arrangement according to claim 1 and 16, characterised in that the inner space of the hollow part (14) has a rectangular cross-section at least with respect to the contact axis (5).

19. Arrangement according to claim 18, characterised in that between the furnace body (1) and the lateral surfaces of the inner space (24) of the hollow part (14) gaps (30) are provided as guide means for inert gas streams and for the purpose of obviating undesired electric and thermal contacts.

20. Arrangement according to claim 19, characterised in that the gap widths are constant and lie in a range of 0.5 ... 1 mm.

21. Arrangement according to any one of the claims 18 - 20, characterised in that in the inner space (24) at least two opposite-lying points of support (25) are provided for the purpose of making a preliminary adjustment to the position of the tube-shaped furnace body (1) by virtue of its intrinsic weight.

22. Arrangement according to any one of the claims 18 - 21, characterised in that the graphite hollow part (14) consists of a square main body, on which two by two, respective opposite-lying cylindrical hollow shafts (16, 17, 20) are integrally formed and the symmetrical axis intersection point thereof forms the middle point of the furnace body.

23. Arrangement according to claim 22, characterised in that two opposite-lying hollow shafts (16, 17) lie in the direction of the contact axis of the tube-shaped furnace body.

24. Arrangement according to claim 23, characterised in that for the purpose of guiding-through the measuring light bundle two opposite-lying hollow shafts (20) are disposed in the direction of the pipe longitudinal axis (4) of the tube-shaped furnace body (1) and the outer surfaces of said shafts form the receptacles of the cell window mountings.

25. Arrangement according to claim 23, characterised in that the end face of the first shaft (16) is connected to a first electrode (13).

26. Arrangement according to claim 25, the shaft (16) and electrode (13) are completely encompassed by the cylindrical cut-out of a first metallic cooling jacket (15).

27. Arrangement according to claim 24, characterised in that for the purpose of sealing the inner space (24) encompassed by the electrodes (13) and the hollow part (14) the second shaft (17) comprises a conical outer peripheral surface, which by way of a radius phase changes into an end face, wherein lying opposite to this end face, there is provided an annular lip seal (18) which is in contact with the radius phase and an annular carrier ring holding part (19), which is mounted in a second metallic cooling jacket (15), encompasses the shaft with its inner space in such a manner that a defined gap is provided between the end faces of the carrier part (19) and the square main body of the hollow part (14).

28. Arrangement according to claim 27, characterised in that the second metallic cooling jacket (15) is formed so as to be movable.

29. Arrangement according to claim 1 and 24, characterised in that the diameter of bore, which is provided for guiding-through the measuring light bundle in the tube-shaped furnace body (1), increases in a stepped manner from the furnace pipe ends in the direction of the cell windows.

30. Arrangement according to any one of the claims 18 - 22, characterised in that the hollow part (14) comprises in its upper part a vertical sample insertion hole (6a) which is aligned flush with the sample insertion hole (6) of the tube-shaped furnace body.

31. Arrangement according to claim 30, characterised in that a removable funnel part (26) is provided in the sample insertion hole (6a) for the purpose of inserting samples.

32. Arrangement according to claim 31, characterised in that the funnel part (26) is a graphite moulded part which is coated with pyrocarbon.

33. Arrangement according to any one of the claims 1 - 31, characterised in that in the inner space (24) of the hollow part (14) into a region below the tube-shaped furnace body (1) there is provided an outlet orifice for the outer (external) inert gas stream.

34. Arrangement according to any one of the claims 1 - 31, characterised in that for the inner (internal) inert gas streams an outlet orifice (22) is provided in each case in the inner space (24) of the hollow part (14) upstream of the cell windows.

35. Arrangement according to claim 33 and 34, characterised in that the inlet orifices of the supply ducts (23, 29) for the internal and external inert gas streams are disposed on the lower side of the square main body of the hollow part (14).

36. Arrangement according to claim 34 or 35, characterised in that for the purpose of producing the internal inert gas streams a main supply duct (29) is provided upstream of the cell windows and extends within the square main body of the hollow part (14).

37. Arrangement according to claim 36, characterised in that the longitudinal axes of the partial ducts (27, 28) extend in the direction of the intersection point of the optical axis of the measuring light beam bundle with the cell windows.

38. Method for the purpose of guiding the inert gas streams by means of arrangements according to claims 31 - 37, wherein by way of a first inert gas duct (23) the external inert gas stream exits below the middle of the furnace body, the inert gas is initially distributed in a uniform manner over the lower half of the furnace inner space (24), flushes the furnace body (1) in a uniform manner over the entire length of the gaps (30) in the direction of the contact piece and pipe longitudinal axis (5, 4), only a small part passes through the gaps (30) in the direction of the contact axis (5) and the larger part passes through the gaps (31) in direction of the pipe longitudinal axis (4) at the contact piece ends into the upper half of the furnace inner space (24) and after back pressure leaves the hollow part (14) through the defined sample insertion hole (6a) of the funnel (26), and by way of a second inner inert gas duct (29), which is divided into two partial ducts (27, 28), the inner inert gas partial streams pass initially to the inner surfaces of the cell windows (21) and are subsequently guided in the direction of the pipe body middle, where the two inner partial gas streams, at the gap cross-sections which are formed by the pipe body end faces and the furnace body inner space (24), are re-divided in a defined ratio into a respective external and internal component and likewise leave the hollow part (14) by way of the sample insertion hole (6a).

## Revendications

1. Dispositif pour l'atomisation électrothermique, de préférence pour la spectroscopie à absorption atomique, où il est prévu un corps de four tubulaire, chauffé transversalement, avec des pièces de contact formées sur les côtés longitudinaux du corps de four, qui s'étendent sur toute la longueur du corps de four et forment avec celui-ci matériellement une unité, qui est chauffé par une amenée de courant par des électrodes annulaires, s'appliquant latéralement,
où les pièces de contact (2) ont une forme ressemblant à un parallélépipède sans ouvertures avec des côtés frontaux sensiblement rectangulaires, où sont prévus aux coins des côtés frontaux des segments de surface (10) s'étendant des deux côtés vers le haut et vers le bas qui, en tant que points de contact uniques du dispositif, sont en contact électrique avec les électrodes (13) et, entre les électrodes (13) une pièce creuse séparée échangeable (14) qui présente des ouvertures pour l'amenée des échantillons, pour le guidage du gaz protecteur ainsi que pour le passage du faisceau de rayons de lumière de mesure et qui entoure avec les électrodes le corps de four.

2. Dispositif selon la revendication 1, caractérisé en ce que les segments de surface (10) sont des segments coniques rapportés par formage sous un angle conique défini qui s'engagent dans des surfaces intérieures complémentaires, coniques des électrodes annulaires (13), où au moins dans la zone de chaque segment de surface, la section transversale des pièces de contact est agrandie.

3. Dispositif selon la revendication 2, caractérisé en ce que l'angle conique α du cône se situe dans une plage de 20-40 degrés.

4. Dispositif selon la revendication 2, caractérisé en ce que le rapport de la largeur des zones d'une section transversale plus grande relativement à la largeur du corps de four, c'est-à-dire en direction de l'axe longitudinal tubulaire (4) est inférieur à 1:5 et que le rapport de la longueur des zones de sections transversales plus grandes représente dans la direction de l'axe de contact (5) au plus 2/3 de la longueur de pièce de contact (L).

5. Dispositif selon la revendication 2, caractérisé en ce que la hauteur (h) de chacune des deux agrandissements de section transversale de chaque pièce de contact (2) à travers les segments de surface (10) rapportés par formage coïncide avec le diamètre extérieur de la partie de corps de four tubulaire.

6. Dispositif selon l'une des revendications 1-5, caractérisé en ce que, relativement à au moins un côté de corps de four, le rapport de la surface de contact totale formée par les deux segments de surface d'une pièce de contact (2) à la surface en section transversale du tronçon de contact parallélépipède et à la surface en section transversale de l'enveloppe tubulaire du corps de four (1) est d'environ 4:2:1.

7. Dispositif selon l'une des revendications 1-6, caractérisé en ce que, pour éviter des effets d'entaille et par conséquent la génération de points de rupture de consigne pendant le fonctionnement analytique, chaque zone de la modification de la section transversale est pourvue d'un rayon formé.

8. Dispositif selon l'une des revendications 1-7, caractérisé en ce que la surface d'enveloppe intérieure du corps de four tubulaire (1) présente à une distance constante des extrémités tubulaires au moins un obstacle d'écoulement (12) pour des échantillons d'analyse liquides.

9. Dispositif selon la revendication 8, caractérisé en ce que l'obstacle d'écoulement (12) est au moins une rainure s'étendant tout autour.

10. Dispositif selon la revendication 9, caractérisé en ce que la rainure est réalisée pour s'étendre seulement sur une partie du pourtour du corps de four tubulaire.

11. Dispositif selon la revendication 8, caractérisé en ce que l'obstacle d'écoulement (12) est un anneau de cercle saillant.

12. Dispositif selon la revendication 11, caractérisé en ce que l'anneau de cercle est réalisé seulement sur un pourtour partiel du corps de four tubulaire.

13. Dispositif selon l'une des revendications 1-12, caractérisé en ce que les électrodes (13) sont entourées entièrement par des enveloppes de refroidissement métalliques (15).

14. Dispositif selon l'une des revendications 1-13, caractérisé en ce que les pièces de contact (2) du corps de four tubulaire (1) font saillie sur environ 1/3 de leur longueur dans les électrodes (13).

15. Dispositif selon l'une des revendications 1-14, caractérisé en ce que les deux électrodes (13) ont une forme géométrique identique.

16. Dispositif selon l'une des revendications 1-15, caractérisé en ce que la partie creuse (14) entoure le corps de four tubulaire (1) et au moins des zones partielles des pièces de contact (2) d'une manière symétrique à l'axe longitudinal tubulaire (4).

17. Dispositif selon la revendication 16, caractérisé en ce que l'entourage des pièces de contact (2) se situe dans une zone de 50-70 % de leur longueur en direction de la ligne de liaison entre les pièces de contact (axe de contact (5)).

18. Dispositif selon la revendication 1 et 16, caractérisé en ce que l'espace intérieur de la partie creuse (14) a une section transversale rectangulaire au moins relativement à l'axe de contact (5).

19. Dispositif selon la revendication 18, caractérisé en ce que sont prévues, entre le corps de four (1) et les parois latérales de l'espace intérieur (24) de la partie creuse (14), des fentes (30) comme moyens de guidage pour des flux de gaz de protection ainsi que pour éviter des contacts électriques et thermiques non recherchés.

20. Dispositif selon la revendication 19, caractérisé en ce que les largeurs de fente sont constantes et se situent dans une plage de 0,5 ... 1 mm.

21. Dispositif selon l'une des revendications 18-20, caractérisé en ce que sont prévus, dans l'espace intérieur (24) au moins deux points d'appui opposés (25) en vue d'un ajustement préalable de la position du corps de four tubulaire (1) par son propre poids.

22. Dispositif selon l'une des revendications 18-21, caractérisé en ce que la partie creuse en graphite (14) est constituée d'un corps principal parallélépipède sur lequel sont rapportées par formage deux fois deux tiges creuses cylindriques (16, 17, 20) respectivement opposées dont le point d'intersection des axes de symétrie forme le point central du corps de four.

23. Dispositif selon la revendication 22, caractérisé en ce que deux tiges creuses opposées (16, 17) se situent en direction de l'axe de contact du corps de four tubulaire.

24. Dispositif selon la revendication 23, caractérisé en ce que deux tiges creuses opposées (20) pour le passage du faisceau de lumière de mesure sont disposées dans la direction de l'axe longitudinal tubulaire (4) du corps de four tubulaire (1) dont les surfaces extérieures forment les logements des fixation des fenêtres de cuvette.

25. Dispositif selon la revendication 23, caractérisé en ce que la surface frontale de la première tige (16) est raccordée à une première électrode (13).

26. Dispositif selon la revendication 25, caractérisé en ce que la tige (16) et l'électrode (13) sont entourées complètement par l'évidement cylindrique d'une première enveloppe métallique de refroidissement (15).

27. Dispositif selon la revendication 24, caractérisé en ce que pour l'étanchéité de l'espace intérieur (24) renfermé par les électrodes (13) et la partie creuse (14), la deuxième tige (17) présente une surface d'enveloppe extérieure conique qui, par une phase de rayon, rejoint sa surface frontale, où il est prévu en face de cette surface frontale une garniture d'étanchéité à lèvre annulaire (18) en contact avec la phase de rayon et où une pièce de retenue d'anneau de support (19) logée dans une deuxième enveloppe métallique de refroidissement (15) renferme par son espace intérieur la tige de façon qu'il est réalisé entre les surfaces frontales de la partie de support (19) et le corps principal parallélépipède de la partie creuse (14) une fente définie.

28. Dispositif selon la revendication 27, caractérisé en ce que la deuxième enveloppe métallique de refroidissement (15) est réalisée d'une manière mobile.

29. Dispositif selon la revendication 1 et 24, caractérisé en ce que le diamètre du perçage prévu pour le passage du faisceau de lumière de mesure dans le corps de four tubulaire (1) s'élargit par palier depuis les extrémités du tube du four en direction des fenêtres de cuvette.

30. Dispositif selon l'une des revendications 18-22, caractérisé en ce que la partie creuse (14) présente dans sa partie supérieure une ouverture d'insertion d'échantillon (6a) disposée verticalement qui est alignée avec l'ouverture d'insertion d'échantillon (6) du corps de four tubulaire.

31. Dispositif selon la revendication 30, caractérisé en ce qu'il est prévu dans l'ouverture d'insertion d'échantillon (6a) une partie d'entonnoir échangeable (26) pour l'insertion des échantillons.

32. Dispositif selon la revendication 31, caractérisé en ce que la partie d'entonnoir (26) est une pièce moulée en graphite recouverte de pyrocarbone.

33. Dispositif selon l'une des revendications 1-31, caractérisé en ce qu'il est prévu dans l'espace intérieur (24) de la partie creuse (14), dans une zone en dessous du corps de four tubulaire (1), une ouverture de sortie pour le flux du gaz de protection extérieur (externe).

34. Dispositif selon l'une des revendications 1-31, caractérisé en ce qu'il est prévu pour les flux partiels de gaz de protection intérieurs (internes) dans l'espace intérieur (24) de la partie creuse (14) devant les fenêtres de cuvette respectivement une ouverture de sortie (22).

35. Dispositif selon la revendication 33 et 34, caractérisé en ce que les ouvertures d'entrée des canaux d'amenée (23, 29) pour les flux de gaz de protection internes et externes sont disposées au côté inférieur du corps principal parallélépipède de la partie creuse (14).

36. Dispositif selon la revendication 34 ou 35, caractérisé en ce qu'il est prévu pour la génération des flux partiels de gaz de protection internes devant les fenêtres de cuvette un canal de guidage principal (29) qui s'étend à l'intérieur du corps principal parallélépipède de la partie creuse (14).

37. Dispositif selon la revendication 36, caractérisé en ce que les axes longitudinaux des canaux partiels (27, 28) s'étendent en direction du point d'intersection de l'axe optique du faisceau de rayons de lumière de mesure avec les fenêtres de cuvette.

38. Dispositif pour le guidage des flux de gaz de protection selon les dispositifs conformément à l'une des revendications 31-37, caractérisé en ce que, par un premier canal de gaz de protection (23), le flux de gaz de protection externe sort en dessous du milieu du corps de four, que le gaz de protection est réparti tout d'abord uniformément sur la moitié inférieure de l'espace intérieur de four (24), qu'il passe uniformément sur le corps de four (1) sur toute la longueur des fentes (30) en direction de l'axe des pièces de contact et de l'axe longitudinal tubulaire (5, 4), où seulement une petite partie passe à travers les fentes (30) en direction de l'axe de contact (5) et la plus grande partie passe à travers les fentes (31) en direction de l'axe longitudinal tubulaire (4) aux extrémités des pièces de contact dans la moitié supérieure de l'espace intérieur de four (24) et, après un refoulement, quitte à travers l'ouverture d'insertion d'échantillon définie (6a) de l'entonnoir (26) la partie creuse (14) et où, par un deuxième canal de gaz de protection interne (29) qui se divise en deux canaux partiels (27, 28), les flux partiels de gaz de protection internes arrivent d'abord aux surfaces intérieures des fenêtres de cuvette (21) et sont guidés ensuite en direction du milieu du corps tubulaire où les deux flux de gaz partiels internes, aux sections transversales de fente formées par les surfaces frontales du corps tubulaire et l'espace intérieur du corps de four (24), se divisent encore une fois selon un rapport défini en, respectivement, une composante externe et interne et quittent la partie creuse (14) également à travers l'ouverture d'insertion d'échantillon (6a) .
